# EUROPEAN PATENT SPECIFICATION

(11) **EP 4 197 947 B1**
(45) Date of publication and mention of the grant of the patent: **07.05.2025**
(21) Application number: 21855790.8
(22) Date of filing: 18.03.2021
(51) Int. Cl.: H02K 41/03, B65G 54/02, G01N 35/04, H02P 25/064

(54) **SPECIMEN TRANSPORT DEVICE, SPECIMEN ANALYSIS SYSTEM, AND SPECIMEN PRETREATMENT DEVICE**
PROBENTRANSPORTVORRICHTUNG, PROBENANALYSESYSTEM UND PROBENVORBEHANDLUNGSVORRICHTUNG
DISPOSITIF DE TRANSPORT D'ÉCHANTILLON, SYSTÈME D'ANALYSE D'ÉCHANTILLON, SYSTÈME DE PRÉTRAITEMENT D'ÉCHANTILLON

(30) Priority: 13.08.2020 JP 2020136653
(43) Date of publication of application: 21.06.2023
(73) Proprietor: HITACHI HIGH-TECH CORPORATION, Tokyo 105-6409 (JP)
(72) Inventor: AOYAMA, Yasuaki, Tokyo 100-8280 (JP); KANEKO, Satoru, Tokyo 100-8280 (JP); KOBAYASHI, Hiroyuki, Tokyo 100-8280 (JP); TAMAKOSHI, Takeshi, Tokyo 100-8280 (JP); HOSHI, Ryosuke, Tokyo 100-8280 (JP); WATANABE, Hiroshi, Tokyo 105-6409 (JP); ONIZAWA, Kuniaki, Tokyo 105-6409 (JP)
(74) Representative: MERH-IP Matias Erny Reichl Hoffmann Patentanwälte PartG mbB
(86) International application number: PCT/JP2021/011082
(87) International publication number: WO 2022/034711

(56) References cited:
- WO-A1-2010/001873
- WO-A1-2020/158264
- JP-A- 2014 532 870
- JP-A- 2016 534 953
- JP-A- H05 153 704
- JP-A- S61 127 104
- JP-A- S61 217 434
- US-A- 5 163 546
- US-A1- 2017 174 448

## Description

### Technical Field

The present invention relates to a sample transport device, a sample analysis system, and a sample pretreatment device.

### Background Art

In a sample analysis system for clinical examination, a sample such as blood, plasma, serum, urine, or other body fluids is tested for an instructed analysis item. In the sample analysis system, devices with a plurality of functions are connected to each other, and steps can be automatically performed. That is, in order to streamline operation in a laboratory, analysis units in a plurality of analysis fields such as biochemistry and immunization and a pretreatment unit that performs a treatment necessary for analysis are connected by a transport line to operate as one system.

A transport line used in a sample analysis system according to the related art is mainly driven by a belt. In the case of being driven by the belt, when transport is stopped due to certain abnormality in the middle of the transport, a sample cannot be supplied to a device downstream of a location where the transport is stopped. Therefore, it is necessary to pay sufficient attention to abrasion of the belt.

In recent years, the importance of a sample treatment has been increased due to advancement of medical care and progress of an aging society. Therefore, in order to improve analytical processing capabilities of the sample analysis system, high-speed transport, mass simultaneous transport, and transport in a plurality of directions of a sample are desired. An example of a technique for implementing such transport includes a technique described in PTL 1.

PTL 1 describes a lab sample delivery system including: plural container carriers (1) each including at least one magnetic active device, preferably at least one permanent magnet, and adapted to carry a sample container containing a sample; a transport plane adapted to carry a plurality of container carriers; plural electromagnetic actuators disposed at rest below the transport plane, and adapted to move the container carrier on the transport plane by applying a magnetic force to the container carrier; and at least one transfer device that transfers a sample article between the transport plane and a lab station, preferably a pre-analysis station, an analysis station, and/or a post-analysis station, in which the sample article is a container carrier, a sample container, a part of the sample, and/or the entire sample. PTL 2 discloses a laboratory sample distribution system in which a sample container carrier can be centered at a specific position.
PTL 3 discloses a device in which a conveyed material, to which a permanent magnet is attached, is placed on a support table equipped with venting holes, and is allowed to be floated by air and moved by means of magnetic attraction.

### Citation List

### Patent Literature

PTL 1: JP2017-227648A
PTL 2: US 2017/174448 Al
PTL 3: JP S61 217434 A

### Summary of Invention

### Technical Problem

The technique described in PTL 1 described above states that the electromagnetic actuator is started in a stepwise manner in accordance with a position of the container carriers.

When a minute position of the permanent magnet is to be changed from a stationary state, there is a frictional force larger than the thrust, the frictional force changes from static friction to dynamic friction, and the accuracy of the minute position of the permanent magnet may be hardly obtained.

In view of the above circumstances, the invention provides a sample transport device, a sample analysis system, and a sample pretreatment device, which have high positional accuracy when stopping a sample and can adjust a minute position when stopping the sample.

### Solution to Problem

The above cited problems are solved in accordance with the appended set of claims. Specifically, according to a first aspect of the invention to solve the above-described problems, there is provided a sample transport device including: a sample provided with a permanent magnet; a transport path through which the sample is to be transported via the permanent magnet; a plurality of coils provided on a surface of the transport path opposite to a surface on which the sample is to be transported; and a drive circuit configured to cause a current to flow through the coils, in which the drive circuit is configured to: adjust a force applied to the permanent magnet in a vertical direction by a current flowing through a first coil immediately below a position at which the permanent magnet is to be stopped, and adjust a force applied to the permanent magnet in a horizontal direction by a current flowing through a second coil adjacent to the first coil, and adjust a stop position of the permanent magnet.

According to a second aspect of the invention, there is provided a sample analysis system including the sample transport device of the invention described above.

According to a third aspect of the invention, there is provided a sample pretreatment device including the sample transport device of the invention described above.

A more specific configuration of the invention is described in the claims.

### Advantageous Effects of Invention

According to the invention, a sample transport device, a sample analysis system, and a sample pretreatment device can be provided, which have high positional accuracy when stopping a sample, and can adjust a minute position when stopping the sample.

Problems, configurations, and effects other than those described above will become apparent from the following description of embodiments.

### Brief Description of Drawings

[FIG. 1] FIG. 1 is a perspective view showing a schematic configuration of a transport device according to a first embodiment.
[FIG. 2] FIG. 2 is a cross-sectional view showing the schematic configuration of the transport device according to the first embodiment.
[FIG. 3] FIG. 3 is a cross-sectional view showing the schematic configuration of the transport device according to the first embodiment.
[FIG. 4] FIG. 4 is a graph showing a force acting in a Z-axis direction in the vicinity of a B position.
[FIG. 5] FIG. 5 is a graph showing thrusts (forces acting in an X direction) at positions when a permanent magnet is moved from an A position to the B position.
[FIG. 6] FIG. 6 is a cross-sectional view showing a schematic configuration of a transport device according to a second embodiment.
[FIG. 7] FIG. 7 is a cross-sectional view showing a schematic configuration of a transport device according to a third embodiment.
[FIG. 8] FIG. 8 is a cross-sectional view showing a schematic configuration of a transport device according to a fourth embodiment.
[FIG. 9] FIG. 9 is a cross-sectional view showing the schematic configuration of the transport device according to the fourth embodiment.
[FIG. 10] FIG. 10 is a schematic diagram showing shapes of a permanent magnet 10 and a core 20 according to a fifth embodiment.
[FIG. 11] FIG. 11 is a cross-sectional view showing a schematic configuration of a transport device according to a sixth embodiment.
[FIG. 12] FIG. 12 is a schematic configuration diagram of a sample transport device according to a seventh embodiment.
[FIG. 13] FIG. 13 is a schematic diagram showing a schematic configuration of a sample analysis system according to an eighth embodiment.
[FIG. 14] FIG. 14 is a schematic diagram showing a schematic configuration of a sample pretreatment system according to a ninth embodiment.

### Description of Embodiments

Hereinafter, embodiments of a transport device, a sample analysis system, and a sample pretreatment device according to the invention will be described with reference to the drawings.

### First Embodiment

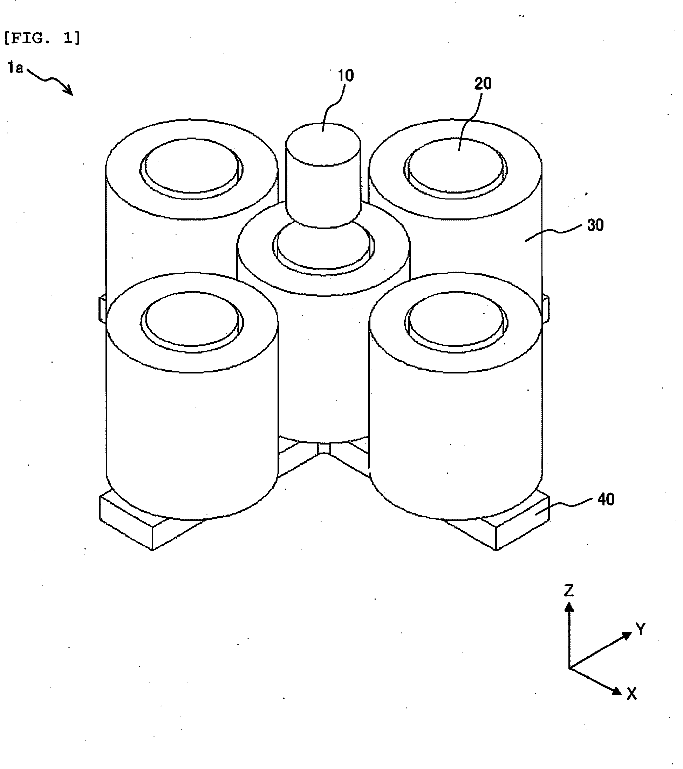

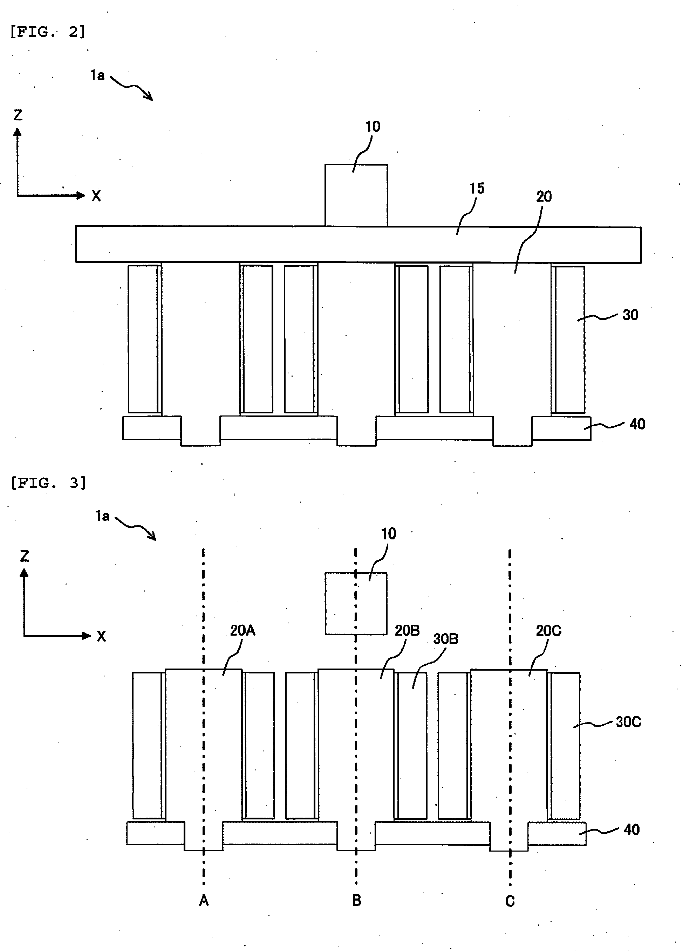

FIG. 1 is a perspective view showing a schematic configuration of a transport device according to a first embodiment, and FIGS. 2 and 3 are cross-sectional views showing the schematic configuration of the transport device according to the first embodiment. As shown in FIGS. 1 to 3, a sample transport device 1a in the present embodiment includes a sample (not shown) provided with a permanent magnet 10, a transport path 15 (FIG. 2) through which the sample is to be transported via the permanent magnet 10, a plurality of coils provided on a surface of the transport path 15 opposite to a surface on which the sample is to be transported, and a drive circuit (not shown) for causing a current to flow through the coils. The permanent magnet 10 is provided in a sample container or the like that is a transport object, and the sample moves along the transport path 15 together with the permanent magnet 10. The coils each include a core 20 made of a magnetic material and a winding 30 wound around an outer periphery of the core 20.

FIG. 1 shows an example of a transport device in which five coils each obtained by providing the winding 30 around the core 20 made of a magnetic material are disposed. The permanent magnet 10 provided in the sample is transported by a magnetic pole generated by a current flowing through the winding 30. That is, a magnetic pole is generated in the core 20 in a desired movement direction (traveling direction), and the permanent magnet 10 is pulled by the magnetic pole, so that the transport object is transported in the traveling direction.

In the present embodiment, the five cores 20 are magnetically coupled by a yoke 40 made of a magnetic material on a side (-Z-axis direction side) opposite to a side on which the sample 10 on the permanent magnet 10 in the transport object is mounted. In this way, there are advantages that the plurality of cores 20 can be held, the accuracy of positions of the cores 20 can be obtained, and at the same time, a magnetic flux acting on the permanent magnet 10 can also be increased. In the present embodiment, the five cores 20 are arranged in a cross shape, and the permanent magnet 10 can be moved in an X-axis direction and a Y-axis direction. The number of the cores 20 in the present embodiment is five, and the number of the cores 20 is not limited to five. The cores 20 spread over a desired transport region, so that transport can be performed over a wide range.

In FIG. 1, the permanent magnet 10 faces the core 20 in the Z-axis direction of the core 20, and is moved on the transport path. The permanent magnet 10 is moved to a position by causing a current to flow through the winding 30 in a desired travelling direction, and causing the core 20 in the desired travelling direction to generate a magnetic pole that attracts a magnetic pole of the permanent magnet 10. In the present embodiment, the flat plate-shaped transport path 15 is disposed on a permanent magnet side of the core 20. The permanent magnet 10 provided in the transport object is moved on a transport surface in a sliding manner.

A method for stopping the permanent magnet 10 in a case where the permanent magnet 10 is moved from a position A to a position B in the X-axis direction, and is stopped at the position B is described using FIG. 3. The transport path is not shown in this figure. For example, in a case where a robot or the like tries to hold a sample at the position B for dropwise addition of a reagent or dispensing work, or in a case where dropwise addition of a reagent or dispensing is performed on a transport surface, the sample or a test liquid may spill out, or in certain cases, an opened sample may collapse, and the sample may spill on the transport surface when a position of the sample or the like serving as a transport object varies. That is, a work error occurs due to a variation in positional accuracy on the transport surface.

An object of the invention is to accurately stop a sample at a target position of the cores 20. When the permanent magnet 10 is to be stopped at the position B, an attractive force acts, in a vicinity of the position B in the X direction, between the permanent magnet 10 and a core 20B immediately below the permanent magnet 10. That is, a force is generated in the -Z direction for the permanent magnet 10. The force generated in the -Z direction is a force for pressing the permanent magnet 10 against the transport surface, and is a frictional force generated when the permanent magnet 10 is moved. Therefore, the force in the -Z direction can be reduced by causing a current to flow through a winding wire 30B wound around the core 20B immediately below the permanent magnet 10 to generate a magnetic pole that repels the magnetic pole of the permanent magnet 10.

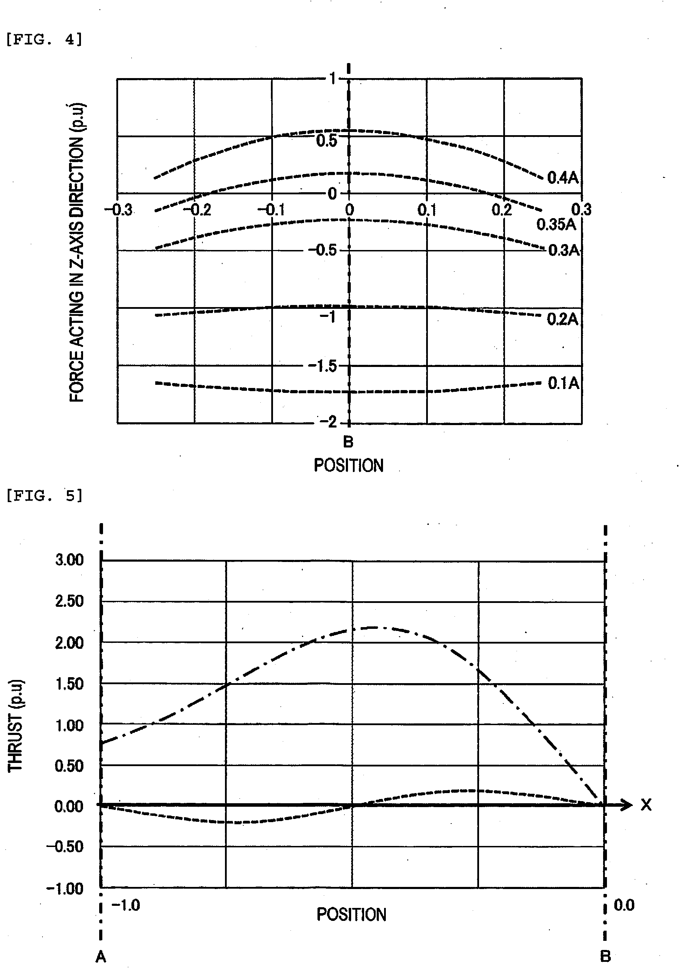

FIG. 4 is a graph showing a force acting in the Z-axis direction in the vicinity of the position B. FIG. 4 shows a current in the winding 30B for generating a magnetic pole that repels the magnetic pole of the permanent magnet 10 and a force in the Z direction that acts on the permanent magnet 10. With an increase in the current for generating the repulsive magnetic pole, the force in the Z direction decreases, and the force in the Z direction can be close to 0 at a current of about 0.3 A to 0.35 A (a force acting in the Z direction when the permanent magnet 10 is located at the position 0 in FIG. 4 which is the position B). Here, when the current for generating the repulsive magnetic pole does not flow through the winding 30B, a force of 1.7 N or more is generated in the -Z direction, which generates a frictional force that presses the permanent magnet 10 against the transport surface.

FIG. 5 is a graph showing thrusts (forces acting in the X direction) at positions in a case where a permanent magnet is moved from the position A to the position B. FIG. 5 shows a force (thrust) in the X direction acting on the permanent magnet 10 when a position of the permanent magnet 10 in the X direction is shifted from A (position -1.0) to B (position 0.0) in a case where a current for attracting the permanent magnet 10 is caused to flow through the winding 30B. In the method according to the related art, when the movement of the permanent magnet 10 is to be stopped at the target position, a current is caused to flow through the winding wire 30B at the position B so as to generate an attractive magnetic pole at the core 20B when the permanent magnet 10 is at the position A, so that the permanent magnet 10 is pulled and stopped at the position B. However, regarding the characteristics of the thrust and the position in this case, the thrust gradually increases once as the permanent magnet 10 moves from the position A to the position B, but decreases from a vicinity exceeding the middle, and the thrust is substantially zero at the position B. That is, when the permanent magnet 10 approaches the vicinity of the target position B, the thrust by which the permanent magnet 10 can be moved in the X direction is substantially zero. Therefore, the positioning accuracy in the vicinity of the target position B deteriorates.

As shown in FIG. 4, the force in the -Z direction acting on the permanent magnet 10 does not change greatly, and thus the frictional force becomes relatively large with respect to the thrust. The thrust overcoming the frictional force cannot be generated, and thus the permanent magnet 10 is less likely to stop at the position B accurately. Once the. permanent magnet 10 stops at a position deviated from the target position B, a static frictional force is generated, and a sufficient thrust for moving the permanent magnet 10 again cannot be generated, or even when the permanent magnet 10 is pulled by an adjacent core, the transport object is rapidly moved at a timing when the static friction is changed to the dynamic friction, and thus minute positioning is hardly performed.

Therefore, by providing at least two coils and causing currents to flow through a first coil (the first winding 30B wound around the core 20B) located at a position facing the permanent magnet at the position where the permanent magnet is stopped and a second coil (a winding 30C wound around a core 20C) adjacent to the winding 30B as the first coil wound around the core 20B, the force in the Z direction (frictional force) is mainly adjusted by the first coil (the first winding 30B), and the force in the X direction (thrust) is mainly adjusted by the second coil (the second winding) 30C, so that the influence of the frictional force can be reduced, and the positioning accuracy can be improved. When currents flow through the windings, forces in both the X direction and the Z direction are generated, and the thrust is smaller than the attractive force in a case where the first winding 30B immediately below the permanent magnet 10 is excited, and the thrust is larger than the attractive force in a case where the second winding 30C adjacent to the first winding 30B is excited. Therefore, by simultaneously causing the current to flow through at least two windings, the thrust and the attractive force can be adjusted, and the accuracy of stopping at the target position is improved.

### Second Embodiment

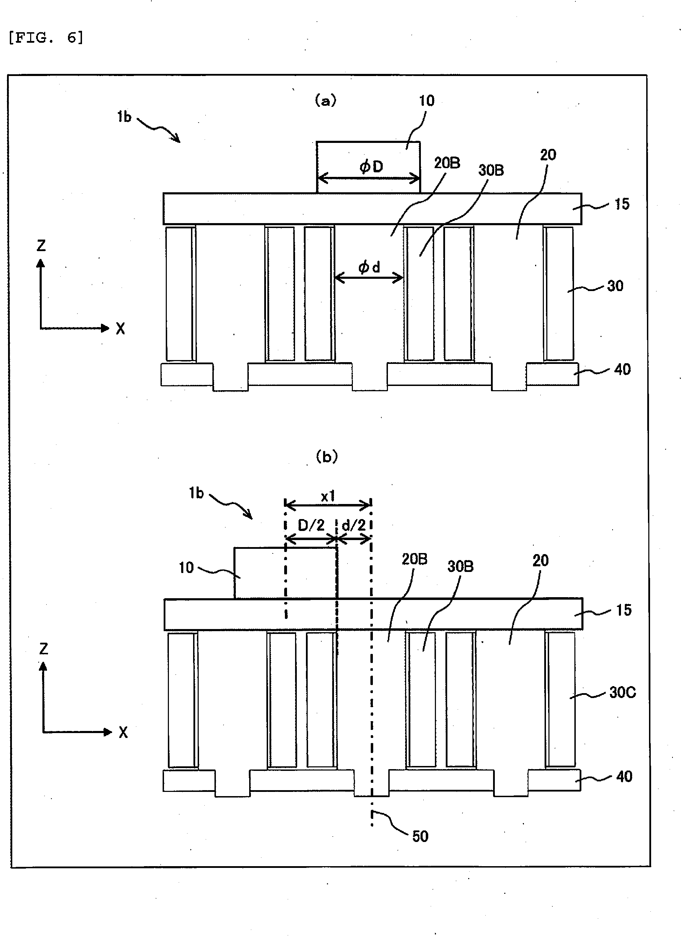

FIG. 6 is a cross-sectional view showing a schematic configuration of a transport device according to a second embodiment. The basic configuration of a sample transport device 1b according to the sixth embodiment is the same as that of the sample transport device 1a shown in FIG. 1.

A distance from a center of the core 20B in the X-axis direction, which is a target stop position of the permanent magnet 10, to the permanent magnet 10 is set as x1. Here, a diameter of the permanent magnet 10 is set as D, and a diameter of the core 20B is set as d.

When the distance x1 between the center of the core as the desired stop position and the permanent magnet 10 is smaller than the radius D/2 of the permanent magnet 10 and the radius d/2 of the core 20B, the permanent magnet 10 and the core 20B face each other with the transport path 15 interposed therebetween. When the facing area increases, the force in the -Z direction increases. That is, the frictional force between the permanent magnet 10 and the core 20B increases. Therefore, within this range, a magnetic pole that repels the permanent magnet 10 is generated in the first coil (the winding 30B wound around the core 20B), so that the frictional force can be reduced. At this time, a magnetic pole for attracting the permanent magnet 10 is generated in 20 of the second coil located ahead in a transport direction of the permanent magnet 10, or the permanent magnet 10 is transferred in the X direction by an inertial force of the permanent magnet 10. That is, in a section of x1 ≤ (D/2 + d/2), a current for generating a magnetic flux that repels a polarity of the permanent magnet is caused to flow through the first winding 20B, so that the frictional force can be reduced and the positioning accuracy can be improved.

When the permanent magnet 10 is moving at a certain speed, the movement in the X direction is performed by the inertial force of the transport object, and a repulsive force is generated by the winding 20B immediately below the permanent magnet 10 only in the section of x1 ≤ (D/2 + d/2), so that the frictional force can also be reduced.

### Third Embodiment

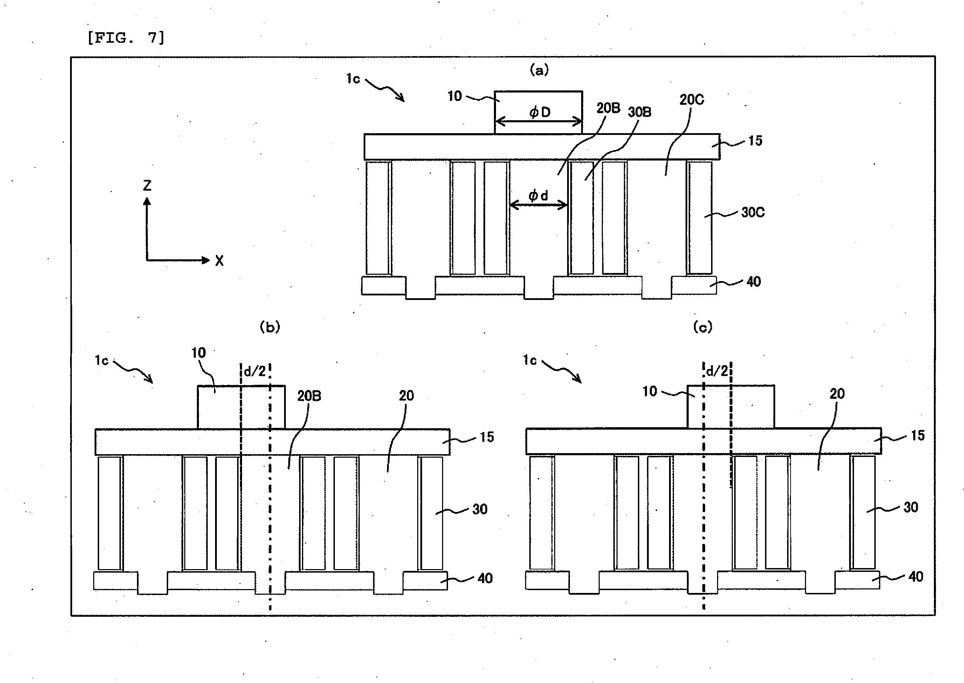

FIG. 7 is a cross-sectional view showing a schematic configuration of a transport device according to a third embodiment. The basic configuration of a sample transport device 1c according to the seventh embodiment is the same as that of the sample transport device 1a shown in FIG. 1.

In FIG. 7, a diameter of the permanent magnet 10 is set as D, and a diameter of the core 20B is set as d. When a center of the permanent magnet 10 is within a range of ±d/2 relative to the center of the core 20B located at a position facing the permanent magnet at the position where the permanent magnet is stopped, the force acting on the permanent magnet 10 in the -Z direction by the core. 20B increases, and the frictional force rapidly increases. Further, since an amount of change in an amount of inflow of current from the permanent magnet 10 to the core 20B does not greatly change and the thrust is determined by an amount of change in a magnetic flux, the above-described range is a region in which the thrust is also small. Therefore, in this region, the frictional force increases and the thrust decreases. A current for generating a magnetic flux that repels the polarity of the permanent magnet 10 is caused to flow through the first winding 20B, so that a ratio of the thrust acting on the permanent magnet 10 to the frictional force, that is, the thrust/frictional force, can be increased. Therefore, the effective thrust is improved, and the accuracy of the stop position is improved.

### Fourth Embodiment

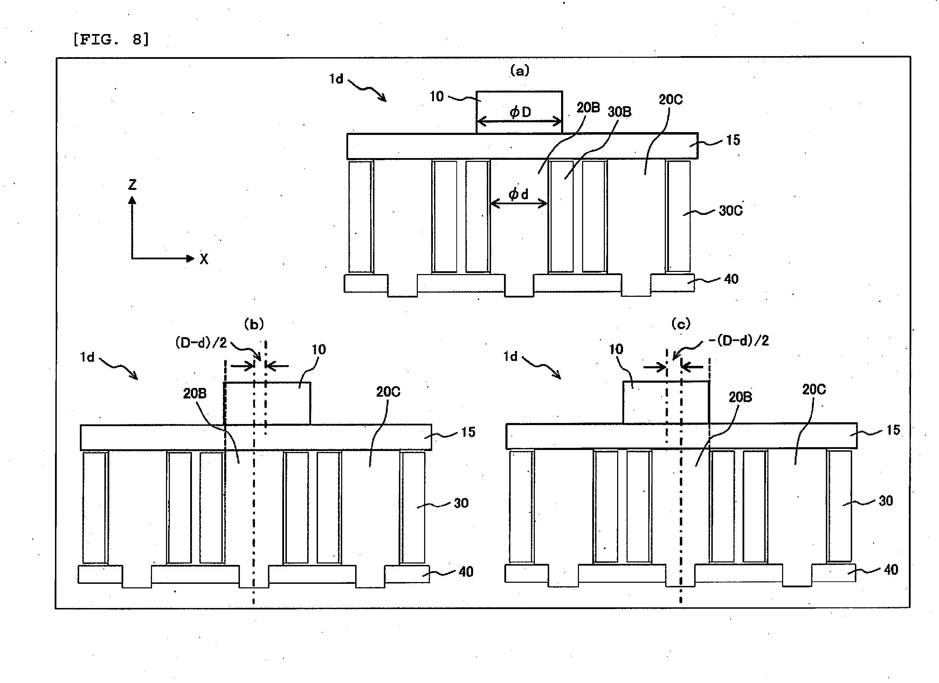

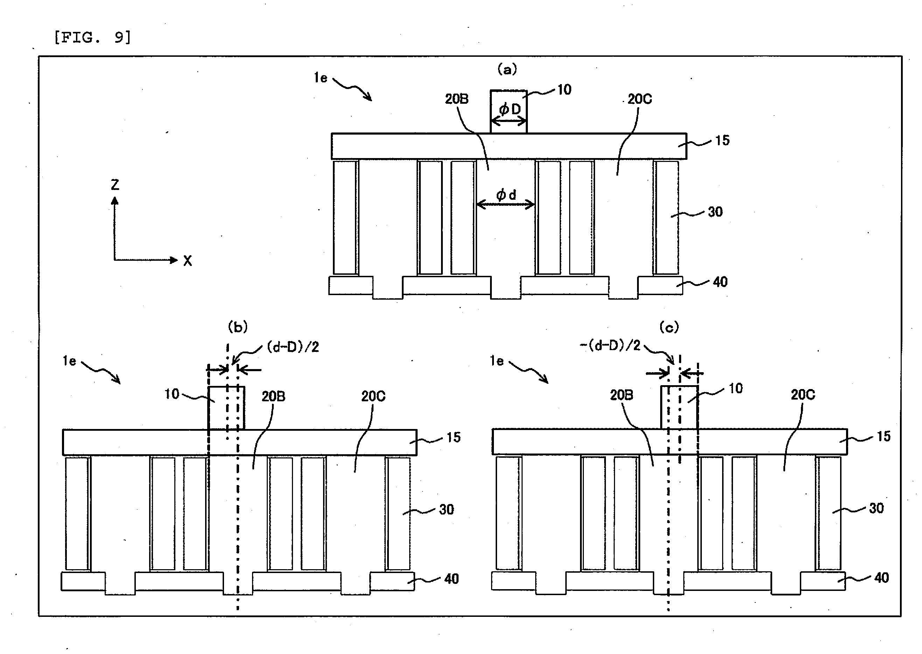

FIGS. 8 and 9 are cross-sectional views showing a schematic configuration of a transport device according to a fourth embodiment. The basic configuration of a sample transport device 1d according to the eighth embodiment is similar to that of the transport device 1 shown in FIG. 1.

In FIG. 8, a diameter of the permanent magnet 10 is set as D, and a diameter of the core 20B is set as d. In FIG. 8, the diameter D of the permanent magnet 10 is larger than the diameter d of the core 20B at a position facing the permanent magnet 10 at a position where the permanent magnet 10 is stopped. In this case, when a center of the permanent magnet 10 is within a range of ±(D - d)/2 relative to a center of the core located at the position facing the permanent magnet 10 at the position where the permanent magnet 10 is stopped, the core 20B on a small diameter side always faces the permanent magnet 10, the facing area also increases, and the change in the facing area is small during the movement within the range. That is, the above-described range is a range in which the force in the -Z direction between the permanent magnet 10 and the core 20B is large, and the thrust is small. At this time, a current for generating a magnetic flux that repels the polarity of the permanent magnet 10 is caused to flow through the first winding 20B, the thrust acting on the permanent magnet 10 can be increased, and the frictional force can be reduced.

Here, shapes of the permanent magnet 10 and the core 20 are not limited to a cylindrical shape, and the same effect may be obtained.

In FIG. 9, a diameter of the permanent magnet 10 is set as D, and a diameter of the core 20B is set as d. In FIG. 9, the diameter D of the permanent magnet 10 is smaller than the diameter d of the core 20B at a position facing the permanent magnet 10 at a position where the permanent magnet 10 is stopped. In this case, when a center of the permanent magnet 10 is within a range. of ± (d - D)/2 relative to a center of the core located at the position facing the permanent magnet 10 at the position where the permanent magnet 10 is stopped, the core 20B on a small diameter side always faces the permanent magnet 10, the facing area also increases, and the change in the facing area is small during the movement within the range. That is, the above-described range is a range in which the force in the -Z direction between the permanent magnet 10 and the core 20B is large, and the thrust is small. At this time, a current for generating a magnetic flux that repels the polarity of the permanent magnet 10 is caused to flow through the first winding 20B, the thrust acting on the permanent magnet 10 can be increased, and the frictional force can be reduced.

### Fifth Embodiment

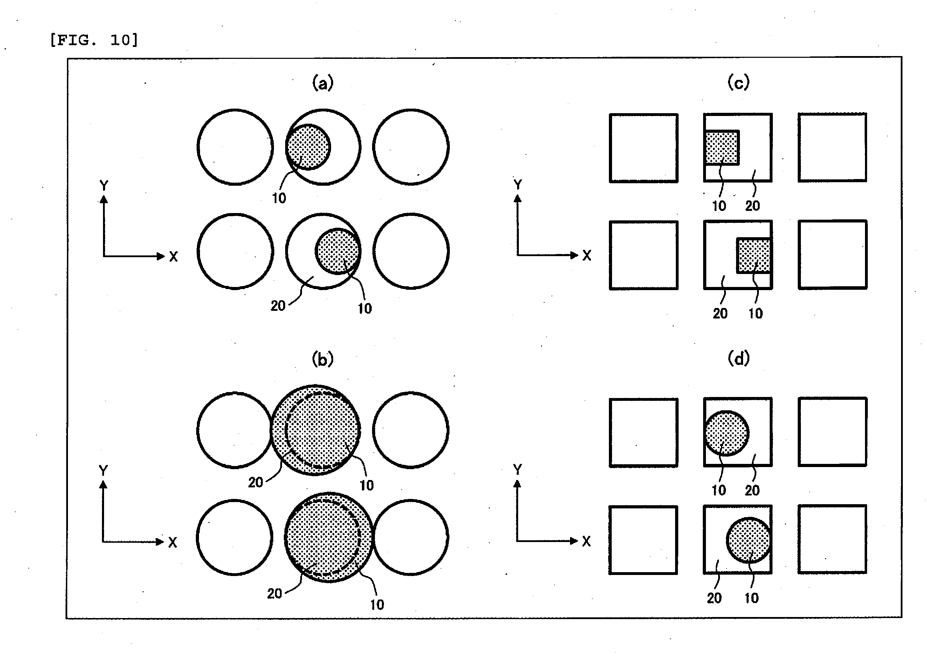

FIG. 10 is a schematic view showing shapes of the permanent magnet 10 and the core 20. In the present embodiment, an example of the shapes of the permanent magnet 10 and the core 20 provided in the sample will be described. (a), (b), (c), and (d) of FIG. 10 are views in which the permanent magnet 10 and the core 20 are projected onto the transport surface (XY plane).

(a) of FIG. 10 shows a case of the cylindrical permanent magnet 10 and the cylindrical core 20, in which a diameter of the permanent magnet 10 is smaller than a diameter of the cylindrical core 20. In this case, in a range in which a projection area of the permanent magnet 10 on an XY plane falls within a projection area of the cylindrical core 20 on the XY plane, a current for generating a magnetic flux that repels the polarity of the permanent magnet 10 is caused to flow through the first winding 20, so that the thrust acting on the permanent magnet 10 can be increased, and the frictional force can be reduced.
(b) of FIG. 10 shows a case of the cylindrical permanent magnet 10 and the cylindrical core 20, in which a diameter of the permanent magnet 10 is larger than a diameter of the cylindrical core 20. In this case, in a range in which a projection area of the cylindrical core 20 on the XY plane falls within a projection area of the permanent magnet 10 on the XY plane, a current for generating a magnetic flux that repels the polarity of the permanent magnet 10 is caused to flow through the first winding 20, so that the thrust acting on the permanent magnet 10 can be increased, and the frictional force can be reduced.
(c) of FIG. 10 shows a case of the rectangular permanent magnet 10 and the rectangular core 20, in which an area of the permanent magnet 10 is smaller than an area of the cylindrical core 20. In this case, in a range in which a projection area of the rectangular permanent magnet 10 on the XY plane falls within a projection area of the rectangular core 20 on the XY plane, a current for generating a magnetic flux that repels the polarity of the permanent magnet 10 is caused to flow through the first winding 20, so that the thrust acting on the permanent magnet 10 can be increased, and the frictional force can be reduced.
(d) of FIG. 10 shows a case of the cylindrical permanent magnet 10 and the rectangular core 20, in which an area of the permanent magnet 10 is smaller than an area of the cylindrical core 20. In this case, in a range in which a projection area of the cylindrical permanent magnet 10 on the XY plane falls within a projection area of the rectangular core 20 on the XY plane, a current for generating a magnetic flux that repels the polarity of the permanent magnet 10 is caused to flow through the first winding 20, so that the thrust acting on the permanent magnet 10 can be increased, and the frictional force can be reduced.

### Sixth Embodiment

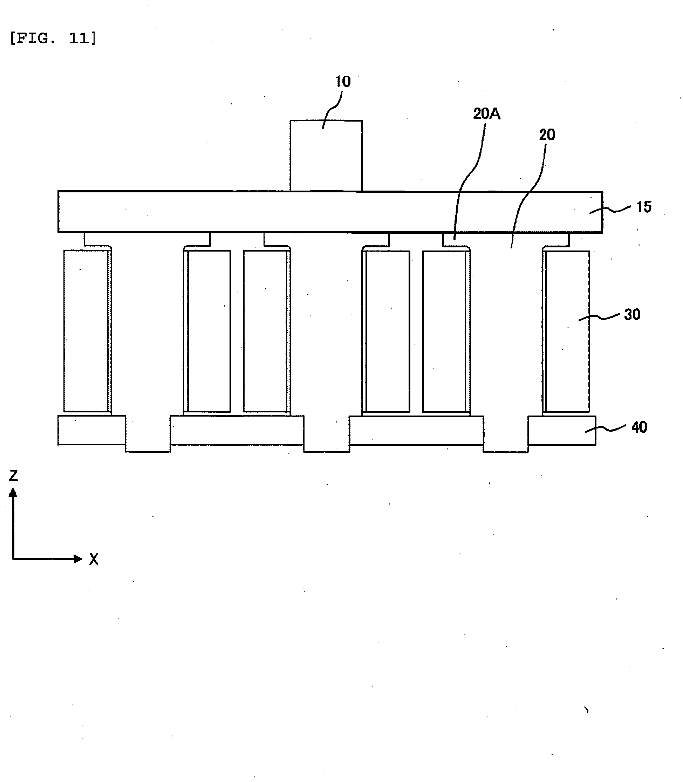

FIG. 11 is a cross-sectional view showing a schematic configuration of a transport device according to a sixth embodiment. The basic configuration and operation are the same as those of other embodiments, and a shape of the core 20 on a side facing the permanent magnet 10 is large, and is larger than a core cross-section on an inner side of the winding 30 (T shape). In this case, a magnetic flux generated by the current flowing through the winding is increased, and the facing area between the permanent magnet 10 and the core 20 can also be increased, and thus a peak of the thrust acting on the permanent magnet 10 in the transport section can be increased (the peak of the thrust shown in FIG. 5 increases). However, the thrust becomes zero immediately above the core 20, and thus the thrust becomes substantially zero in a vicinity of the core 20 in the X direction. On the other hand, the facing area between the permanent magnet 10 and the core 20 increases, and the force in the -Z direction, that is, the frictional force increases. In this way, a large peak thrust is obtained by forming the shape of the core 20 into a T-shape, and the frictional force immediately above the core 20 is reduced, so that a transport device in which the transport capability and thrust for transport are increased and the frictional force is small can be provided.

### Seventh Embodiment

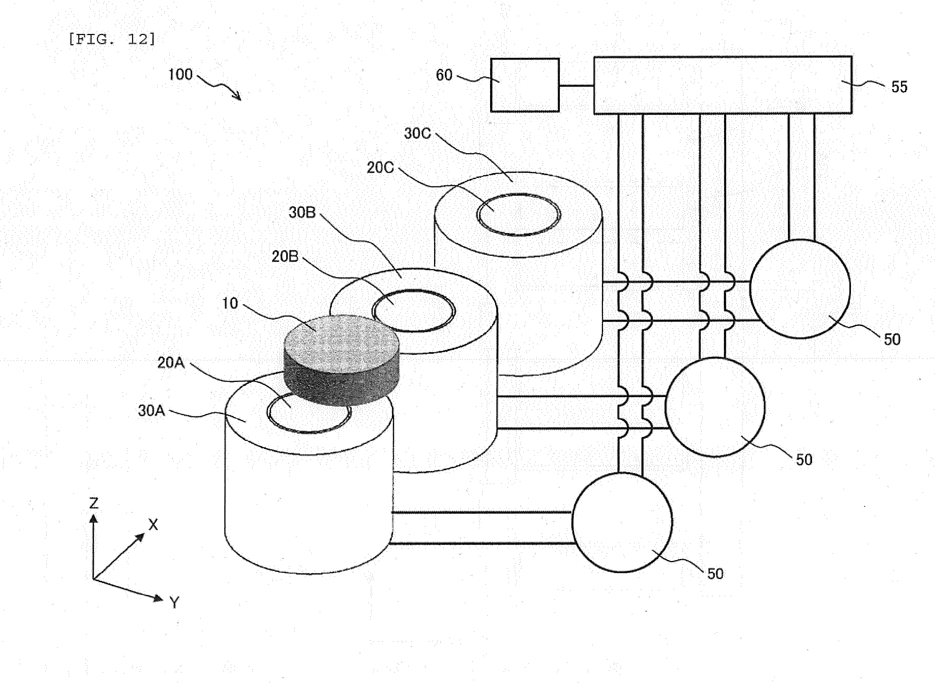

FIG. 12 is a schematic view of a sample transport device according to a seventh embodiment. In the present embodiment, a configuration of a periphery of the sample transport devices described in the first to sixth embodiments will be described in more detail. A sample transport device 100 according to the seventh embodiment includes three cores 20A, 20B, and 20C, and windings 30A, 30B, and 30C respectively disposed around the cores. The windings are each provided with a drive circuit 50, and a current value of each of the windings can be individually controlled. A position or speed detection unit 60 that detects a position of the permanent magnet 10 is provided, and the current value is calculated by a current command calculation unit 55 based on the information. With such a configuration, the current value of each of the windings is adjusted based on the position of the permanent magnet 10, so that positioning of a minute position is enabled, and the accuracy of the transport position can be improved. Eighth Embodiment

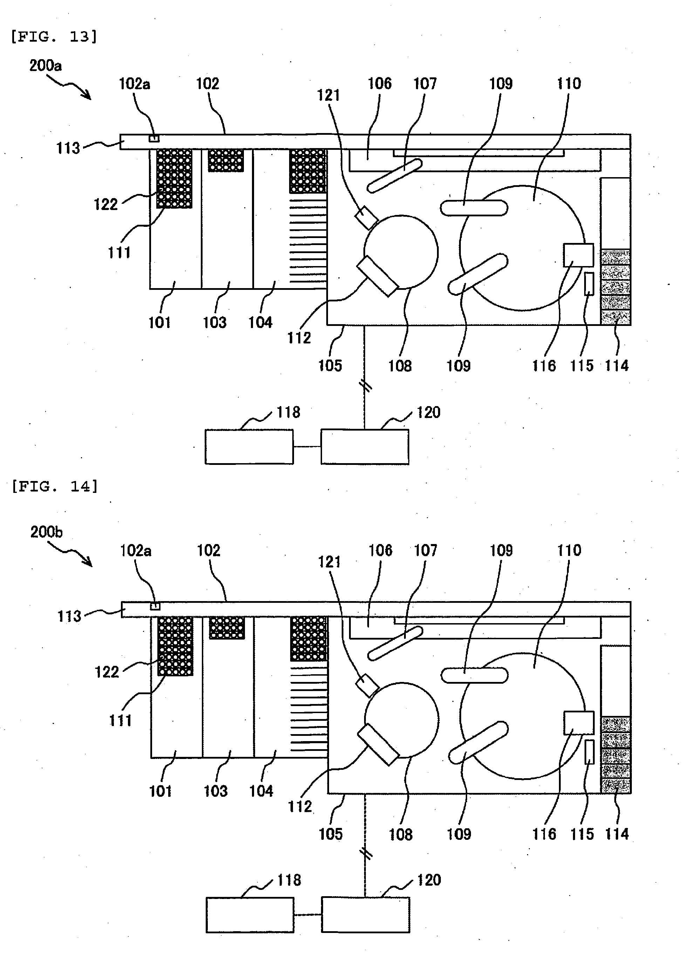

FIG. 13 is a schematic diagram of a sample analysis system according to an eighth embodiment. In the present embodiment, a sample analysis system including the sample transport device of the invention will be described.

As shown in FIG. 13, a sample analysis system 200a is a device that separately dispenses a sample and a reagent into a reaction container and causes a reaction therebetween, and measures the reacted liquid. The sample analysis system 200a includes a carry-in unit 101, an emergency rack loading port 113, a transport line 102, a buffer 104, an analysis unit 105, a storage unit 103, a display unit 118, and a control unit 120.

The carry-in unit 101 is a place provided with a sample rack 111 for storing a plurality of sample containers 122 that contain biological samples such as blood and urine. The emergency rack loading port 113 is a place for inputting, into the device, a sample rack (carrier rack) loaded with a standard solution, or the sample rack 111 for storing the sample containers 122 that contain samples requiring urgent analysis.

The buffer 104 holds the plurality of sample racks 111 transported by the transport line 102 such that a dispensing order of the samples in the sample racks 111 can be changed.

The analysis unit 105 analyzes a sample transported from the buffer 104 via the conveyor line 106. Details thereof will be described later.

The storage unit 103 stores the sample rack 111 in which the sample container 122 holding a sample that was analyzed by the analysis unit 105 is stored.

The transport line 102 is a line for transporting the sample rack 111 disposed in the carry-in unit 101, and has the configuration of the sample transport device of the invention described in the first to sixth embodiments. In the present embodiment, a magnetic material, preferably a permanent magnet, is provided on a back surface side of the sample rack 111.

The analysis unit 105 includes the conveyor line 106, a reaction disk 108, a sample dispensing nozzle 107, a reagent disk 110, a reagent dispensing nozzle 109, a cleaning mechanism 112, a reagent tray 114, a reagent ID reader 115, a reagent loader 116, a spectrophotometer 121, and the like.

The conveyor line 106 is a line for carrying the sample rack 111 in the buffer 104 into the analysis unit 105, and has the configuration of the sample transport device of the invention described in the first to sixth embodiments.

The reaction disk 108 includes a plurality of reaction containers. The sample dispensing nozzle 107 dispenses a sample from the sample container 122 into the reaction container of the reaction disk 108 by rotational driving or vertical driving. The reagent disk 110 is provided with a plurality of reagents. The reagent dispensing nozzle 109 dispenses a reagent from a reagent bottle in the reagent disk 110 into the reaction container of the reaction disk 108. The cleaning mechanism 112 cleans the reaction containers of the reaction disk 108. The spectrophotometer 121 measures the absorbance of a reaction liquid by measuring transmitted light obtained from a light source (not shown) through the reaction liquid in the reaction container.

The reagent tray 114 is a member for placing a reagent when the reagent is registered in the sample analysis system 200a. The reagent ID reader 115 is a device for acquiring reagent information by reading a reagent ID attached to the reagent placed in the reagent tray 114. The reagent loader 116 is a device for carrying the reagent into the reagent disk 110.

The display unit 118 is a display device for displaying an analysis result of a concentration of a predetermined component in a liquid sample such as blood and urine.

The control unit 120 is implemented by a computer or the like, controls operation of the mechanisms in the sample analysis system 200a, and performs a calculation process for determining a concentration of a predetermined component in a sample such as blood and urine.

The overall configuration of the sample analysis system 200a is described above.

The sample analysis process performed by the sample analysis system 200a as described above is generally executed in the following order.

First, the sample racks 111 are disposed in the carry-in unit 101 or the emergency rack loading port 113, and are carried, by the transport line 102, in the buffer 104 that allows random access.

The sample analysis system 200a carries the sample rack 111 having the highest priority among the racks stored in the buffer 104 into the analysis unit 105 by the conveyor line 106 in accordance with the rule of the priority.

The sample rack 111 that arrived at the analysis unit 105 is further transferred to a sample sorting position near the reaction disk 108 by the conveyor line 106, and a sample is dispensed into a reaction container of the reaction disk 108 by the sample dispensing nozzle 107. The sample dispensing nozzle 107 dispenses the sample a necessary number of times in accordance with an analysis item requested for the sample.

The sample dispensing nozzle 107 dispenses samples from all the sample containers 122 mounted on the sample rack 111. The sample rack 111 for which the dispensing process for all the sample containers 122 is completed is transferred to the buffer 104 again. Further, the sample rack 111 for which all the sample dispensing processes including the automatic retest were completed is transferred to the storage unit 103 by the conveyor line 106 and the transport line 102.

A reagent used for the analysis is dispensed, by the reagent dispensing nozzle 109, from a reagent bottle on the reagent disk 110 to the reaction container to which the sample was previously dispensed. Subsequently, a mixture of the sample and the reagent in the reaction container is stirred by a stirring mechanism (not shown).

Then, the light generated from the light source is transmitted through the reaction container containing the mixed solution after stirring, and the light intensity of the transmitted light is measured by the spectrophotometer 121. The light intensity measured by the spectrophotometer 121 is sent to the control unit 120 via an A/D converter and an interface. Then, the control unit 120 performs calculation to determine a concentration of a predetermined component in a liquid sample such as blood and urine, and the result is displayed on the display unit 118 or the like or stored in a storage unit (not shown).

As shown in FIG. 13, the sample analysis system 200a does not need to include all the configurations described above, and a unit for pretreatment may be appropriately added, or a part of units or a part of configurations may be deleted. In addition, the analysis unit 105 is not limited to biochemical analysis, and may be used for immunoanalysis. Further, the number of the analysis unit 105 is not necessarily one, and two or more analysis units 105 may be provided. In this case, the transport line 102 also connects the analysis unit 105 and the carry-in unit 101, and transports the sample rack 111 from the carry-in unit 101.

### Ninth Embodiment

FIG. 14 is a schematic diagram of a sample pretreatment system. In the present embodiment, an overall configuration of a sample pretreatment device 150 will be described with reference to FIG. 14.

In FIG. 14, the sample pretreatment device 150 is a device that executes various kinds of pretreatments necessary for analysis of a sample. As shown from the left side to the right side in FIG. 14, the sample pretreatment device 150 includes a plurality of units including, as basic elements, a closing unit 152, a sample storage unit 153, an empty holder stacker 154, a sample input unit 155, a centrifugal separation unit 156, a liquid volume measurement unit 157, an opening unit 158, a child sample container preparation unit 159, a dispensing unit 165, and a transfer unit 161, and an operation unit PC 163 that controls the operations of the plurality of units.

As a transfer destination of the sample treated by the sample pretreatment device 150, the sample analysis system 200a for performing qualitative or quantitative analysis of components in the sample is connected.

The sample input unit 155 is a unit for inputting the sample container 122 containing a sample into the sample pretreatment device 150. The centrifugal separation unit 156 is a unit that performs centrifugal separation on the input sample container 122. The liquid volume measurement unit 157 is a unit that measures the liquid volume of the sample contained in the sample container 122. The opening unit 158 is a unit that opens a plug of the inputted sample container 122. The child sample container preparation unit 159 is a unit that performs preparation necessary for dispensing the sample contained in the input sample container 122 into the next dispensing unit 165. The dispensing unit 165 is a unit that performs subdivision on the centrifugally separated sample for analysis with a sample analysis system or the like, and attaches a bar code or the like to the sample container 122 that is subjected to the subdivision, that is, the child sample container 122. The transfer unit 161 is a unit that classifies the child sample container 122 into which the sample is dispensed, and prepares for transfer to the sample analysis system. The closing unit 152 is a unit that closes the sample container 122 or the child sample container 122. The sample storage unit 153 is a unit that stores the closed 'sample container 122.

The transport device according to any one of the first to sixth embodiments is used as a mechanism that transports a sample holder or a sample rack that holds the sample container 122 between the units or between the sample pretreatment device 150 and the sample analysis system 200a.

The sample pretreatment device 150 does not need to include all the configurations described above, and a unit may be added, or a part of units or a part of configurations may be deleted.

The sample analysis system in the present embodiment may be a sample analysis system 200 including the sample pretreatment device 150 as shown in FIG. 14 and the sample analysis system 200a. In this case, not only an inside of each system but also a system and another system can be connected by the sample transport device according to the first to third embodiments described above, and the sample container 122 can be transported.

The sample analysis system 200a according to the seventh embodiment of the invention and the sample pretreatment device 150 include the transport device 1a in the first embodiment described above, so that the sample container 122 can be transported to a transport destination with high efficiency, and the time until the analysis result is obtained can be shortened. In addition, the transport trouble is reduced, and the burden on the laboratory technician can be reduced.

The present embodiment describes an example of a case in which the sample rack 111 holding five sample containers 122 containing samples is transported as a transport target. Alternatively, a sample holder holding two sample containers 122 can be transported as a transport target, in addition to the sample rack 111 holding five sample containers 122.

The invention is not limited to the above-described embodiments, and includes various modifications. The above embodiments have been described in detail for easy understanding of the invention, and the invention is not necessarily limited to those including all the configurations described above.

A part of a configuration of one embodiment can be replaced with a configuration of another embodiment, and a configuration of another embodiment can also be added to the configuration of the one embodiment. In addition, a part of the configurations of the embodiments may be added to, deleted from, or replaced with another configuration.

For example, the first to eighth embodiments have described the case where the transport object to be transported by the transport device is the sample rack 111 or the sample holder. Alternatively, the transport object is not limited to the rack or the holder that holds the sample container 122, and various objects that are required to be transported in a large scale can be set as transport targets.

### Reference Signs List

- 1a, 1b, 1c, 1d, 1e: sample transport device
- 10: permanent magnet
- 15: transport path
- 20, 20A, 20B, 20C: core (magnetic pole)
- 30, 30A, 30B, 30C: winding
- 40: yoke
- 50: drive circuit
- 55: current command calculation unit
- 60: position or speed detection unit
- 100: sample analysis system
- 101: carry-in unit
- 102: transport line
- 103: storage unit
- 104: buffer
- 105: analysis unit
- 106: conveyor line
- 107: sample dispensing nozzle
- 108: reaction disk
- 109: reagent dispensing nozzle
- 110: reagent disk
- 111: sample rack (transported object)
- 112: cleaning mechanism
- 113: emergency rack loading port
- 114: reagent tray
- 115: reader
- 116: reagent loader
- 118: display unit
- 120: control unit
- 121: spectrophotometer
- 122: sample container
- 150: sample pretreatment device
- 152: closing unit
- 153: sample storage unit
- 154: holder stacker
- 155: sample input unit
- 156: centrifugal separation unit
- 157: liquid volume measurement unit
- 158: opening unit
- 159: child sample container preparation unit
- 161: transfer unit
- 163: operation unit PC
- 165: dispensing unit
- 200a: sample analysis system

## Claims

1. A sample transport device, comprising:
a sample provided with a permanent magnet (10);
a transport path (15) through which the sample is to be transported via the permanent magnet (10);
a plurality of coils (30) provided on a surface of the transport path (15) opposite to a surface on which the sample is to be transported; and
a drive circuit (50) configured to cause a current to flow through the coils, wherein
wherein the drive circuit (50) is configured to:
adjust a force applied to the permanent magnet (10) in a vertical direction by a current flowing through a first coil immediately below a position at which the permanent magnet (10) is to be stopped, and
adjust a force applied to the permanent magnet (10) in a horizontal direction by a current flowing through a second coil adjacent to the first coil, and adjust a stop position of the permanent magnet (10) by simultaneously applying currents to the first coil and the second coil,
**characterized in that**
the drive circuit (50) is configured to adjust the stop position of the permanent magnet (10) by causing a current generating a magnetic flux that repels a polarity of the permanent magnet (10) to flow through the first coil.

2. The sample transport device according to claim 1, wherein
magnetic fluxes generated by the first coil and the second coil have different polarities of magnetic fluxes generated on a side of a surface facing the permanent magnet (10).

3. The sample transport device according to claim 1, wherein
when a distance between a center of the permanent magnet (10) and a center of the first coil is set as x1,
a distance from the center of the permanent magnet (10) to an end portion of the permanent magnet (10) is set as D/2, and
a distance from the center of the first coil to the end portion of the permanent magnet (10) is d/2,
the drive circuit (50) adjusts the stop position of the permanent magnet (10) by causing a current generating a magnetic flux that repels a polarity of the permanent magnet (10) to flow through the first coil in a section in which x1 ≤ (D/2 + d/2).

4. The sample transport device according to claim 1, wherein
when a distance between a center of the permanent magnet (10) and a center of the first coil is set as d/2,
when the center of the permanent magnet (10) is in a section of ±d/2, the drive circuit (50) adjusts the stop position of the permanent magnet (10) by causing a current generating a magnetic flux that repels a polarity of the permanent magnet (10) to flow through the first coil.

5. The sample transport device according to claim 1, wherein
each of the coils (30) includes a core (20) made of a magnetic material and a winding wound around an outer periphery of the core (20),
a diameter D of the permanent magnet (10) is larger than a diameter d of a core (20) of the first coil, and
when a center of the permanent magnet (10) is in a range of ±(D - d)/2, the drive circuit (50) adjusts the stop position of the permanent magnet (10) by causing a current generating a magnetic flux that repels a polarity of the permanent magnet (10) to flow through the first coil.

6. The sample transport device according to claim 1, wherein
each of the coils (30) includes a core (20) made of a magnetic material and a winding wound around an outer periphery of the core (20),
a diameter D of the permanent magnet (10) is smaller than a diameter d of a core (20) of the first coil, and
when a center of the permanent magnet (10) is in a range of ±(d - D)/2, the drive circuit (50) adjusts the stop position of the permanent magnet (10) by causing a current generating a magnetic flux that repels a polarity of the permanent magnet (10) to flow through the first coil.

7. The sample transport device according to claim 1, wherein
each of the coils includes a core (20) made of a magnetic material and a winding wound around an outer periphery of the core (20), and
an area of the permanent magnet (10) projected onto a transport surface is smaller than an area of the core (20) projected onto the transport surface.

8. The sample transport device according to claim 1, wherein
each of the coils includes a core (20) made of a magnetic material and a winding wound around an outer periphery of the core (20), and
an area of the core (20) projected onto a transport surface is included in an area of the permanent magnet (10) projected onto the transport surface.

9. The sample transport device according to claim 1, wherein
a shape of a core (20) of the first coil is a T-shape, and a cross-sectional area of the core (20) on a side of a surface facing the permanent magnet (10) is larger.

10. The sample transport device according to claim 1, further comprising:
a winding of the second coil and a winding of a third coil arranged so as to sandwich a winding of the first coil, wherein
the sample transport device is configured to cause a current generating a magnetic flux repelling a polarity of the permanent magnet (10) to flow through the winding of the first coil, and to cause a current generating a magnetic flux attracting the polarity of the permanent magnet (10) to flow through the winding of the second coil and the winding of the third coil.

11. The sample transport device according to any one of claims 1 to 10, further comprising:
a unit configured to detect a position of the permanent magnet (10).

12. A sample analysis system comprising:
the sample transport device according to any one of claims 1 to 10.

13. A sample pretreatment device comprising:
the sample transport device according to any one of claims 1 to 10.

## Patentansprüche

1. Probentransportvorrichtung, die umfasst:
eine Probe, die mit einem Permanentmagneten (10) ausgestattet ist;
einen Transportweg (15), durch den die Probe über den Permanentmagneten (10) zu transportieren ist;
mehrere Spulen (30), die auf einer Fläche des Transportwegs (15) gegenüber einer Fläche, auf der die Probe zu transportieren ist, vorgesehen sind; und
eine Ansteuerschaltung (50), die konfiguriert ist, zu bewirken, dass ein Strom durch die Spulen fließt, wobei
wobei die Ansteuerschaltung (50) konfiguriert ist zum:
Anpassen einer Kraft, die auf den Permanentmagneten (10) in einer vertikalen Richtung ausgeübt wird, durch einen Strom, der durch eine erste Spule unmittelbar unter einer Position, an der der Permanentmagnet (10) zu stoppen ist, fließt, und
Anpassen einer Kraft, die auf den Permanentmagneten (10) in einer horizontalen Richtung ausgeübt wird, durch einen Strom, der durch eine zweite Spule angrenzend an die erste Spule fließt, und Anpassen einer Stoppposition des Permanentmagneten (10) durch gleichzeitiges Anlegen von Strömen an die erste Spule und die zweite Spule,
**dadurch gekennzeichnet, dass**
die Ansteuerschaltung (50) konfiguriert ist, die Stoppposition des Permanentmagneten (10) durch Bewirken, dass ein Strom, der einen Magnetfluss erzeugt, der eine Polarität des Permanentmagneten (10) abstößt, durch die erste Spule fließt, anzupassen.

2. Probentransportvorrichtung nach Anspruch 1, wobei
Magnetflüsse, die durch die erste Spule und die zweite Spule erzeugt werden, verschiedene Polaritäten von Magnetflüssen, die auf einer Seite einer Fläche, die dem Permanentmagneten (10) zugewandt ist, erzeugt werden, besitzen.

3. Probentransportvorrichtung nach Anspruch 1, wobei
dann, wenn ein Abstand zwischen einem Mittelpunkt des Permanentmagneten (10) und einem Mittelpunkt der ersten Spule als x1 eingestellt wird,
ein Abstand von dem Mittelpunkt des Permanentmagneten (10) zu einem Endteil des Permanentmagneten (10) als D/2 eingestellt wird und
ein Abstand von dem Mittelpunkt der ersten Spule zu dem Endteil des Permanentmagneten (10) d/2 ist,
die Ansteuerschaltung (50) die Stoppposition des Permanentmagneten (10) anpasst durch Bewirken, dass ein Strom, der einen Magnetfluss erzeugt, der eine Polarität des Permanentmagneten (10) abstößt, durch die erste Spule in einem Abschnitt, in dem x1 ≤ (D/2 - d/2) ist, fließt.

4. Probentransportvorrichtung nach Anspruch 1, wobei
dann, wenn ein Abstand zwischen einem Mittelpunkt des Permanentmagneten (10) und einem Mittelpunkt der ersten Spule als d/2 eingestellt wird, und
dann, wenn der Mittelpunkt des Permanentmagneten (10) in einem Abschnitt von ±d/2 liegt, die Ansteuerschaltung (50) die Stoppposition des Permanentmagneten (10) anpasst durch Bewirken, dass ein Strom, der einen Magnetfluss erzeugt, der eine Polarität des Permanentmagneten (10) abstößt, durch die erste Spule fließt.

5. Probentransportvorrichtung nach Anspruch 1, wobei
jede der Spulen (30) einen Kern (20), der aus einem magnetischen Material hergestellt ist, und eine Wicklung, die um einen äußeren Umfang des Kerns (20) gewickelt ist, enthält,
ein Durchmesser D des Permanentmagneten (10) größer als ein Durchmesser d eines Kerns (20) der ersten Spule ist und
dann, wenn ein Mittelpunkt des Permanentmagneten (10) in einem Bereich von ±(D - d)/2 liegt, die Ansteuerschaltung (50) die Stoppposition des Permanentmagneten (10) anpasst durch Bewirken, dass ein Strom, der eine Polarität des Permanentmagneten (10) abstößt, durch die erste Spule fließt.

6. Probentransportvorrichtung nach Anspruch 1, wobei
jede der Spulen (30) einen Kern (20), der aus einem magnetischen Material hergestellt ist, und eine Wicklung, die um einen äußeren Umfang des Kerns (20) gewickelt ist, enthält,
ein Durchmesser D des Permanentmagneten (10) kleiner als ein Durchmesser d eines Kerns (20) der ersten Spule ist und
dann, wenn ein Mittelpunkt des Permanentmagneten (10) in einem Bereich von ±(d - D)/2 liegt, die Ansteuerschaltung (50) die Stoppposition des Permanentmagneten (10) anpasst durch Bewirken, dass ein Strom, der einen Magnetfluss erzeugt, der eine Polarität des Permanentmagneten (10) abstößt, durch die erste Spule fließt.

7. Probentransportvorrichtung nach Anspruch 1, wobei
jede der Spulen einen Kern (20), der aus einem magnetischen Material hergestellt ist, und eine Wicklung, die um einen äußeren Umfang des Kerns (20) gewickelt ist, enthält und
eine Fläche des Permanentmagneten (10), die auf eine Transportfläche projiziert wird, kleiner ist als eine Fläche des Kerns (20), die auf die Transportfläche projiziert wird.

8. Probentransportvorrichtung nach Anspruch 1, wobei
jede der Spulen einen Kern (20), der aus einem magnetischen Material hergestellt ist, und eine Wicklung, die um einen äußeren Umfang des Kerns (20) gewickelt ist, enthält und
eine Fläche des Kerns (20), die auf eine Transportfläche projiziert wird, in einer Fläche des Permanentmagneten (10), die auf die Transportfläche projiziert wird, enthalten ist.

9. Probentransportvorrichtung nach Anspruch 1, wobei
eine Form eines Kerns (20) der ersten Spule eine T-Form ist und eine Querschnittsfläche des Kerns (20) auf einer Seite einer Fläche, die dem Permanentmagnet (10) zugewandt ist, größer ist.

10. Probentransportvorrichtung nach Anspruch 1, die ferner umfasst:
eine Wicklung der zweiten Spule und eine Wicklung einer dritten Spule, die so ausgelegt sind, dass sie eine Wicklung der ersten Spule umgeben, wobei
die Probentransportvorrichtung konfiguriert ist, zu bewirken, dass ein Strom, der einen Magnetfluss erzeugt, der eine Polarität des Permanentmagneten (10) abstößt, durch die Wicklung der ersten Spule fließt, und zu bewirken, dass ein Strom, der einen Magnetfluss erzeugt, der die Polarität des Permanentmagneten (10) anzieht, durch die Wicklung der zweiten Spule und die Wicklung der dritten Spule fließt.

11. Probentransportvorrichtung nach einem der Ansprüche 1 bis 10, die ferner umfasst:
eine Einheit, die konfiguriert ist, eine Position des Permanentmagneten (10) zu detektieren.

12. Probenanalysesystem, das umfasst:
die Probentransportvorrichtung nach einem der Ansprüche 1 bis 10.

13. Probenvorbehandlungsvorrichtung, die umfasst:
die Probentransportvorrichtung nach einem der Ansprüche 1 bis 10.

## Revendications

1. Dispositif de transport d'échantillon, comprenant :
un échantillon muni d'un aimant permanent (10) ;
un trajet de transport (15) par lequel l'échantillon doit être transporté via l'aimant permanent (10) ;
une pluralité de bobines (30) prévues sur une surface du trajet de transport (15) opposée à une surface sur laquelle l'échantillon doit être transporté ; et
un circuit de pilotage (50) configuré pour amener un courant à s'écouler à travers les bobines, dans lequel
le circuit de pilotage (50) est configuré pour :
ajuster une force appliquée à l'aimant permanent (10) dans une direction verticale par un courant s'écoulant à travers une première bobine juste en dessous d'une position à laquelle l'aimant permanent (10) doit être arrêté, et ajuster une force appliquée à l'aimant permanent (10) dans une direction horizontale par un courant s'écoulant à travers une deuxième bobine adjacente à la première bobine, et ajuster une position d'arrêt de l'aimant permanent (10) en appliquant simultanément des courants à la première bobine à la deuxième bobine,
**caractérisé en ce que**
le circuit de pilotage (50) est configuré pour ajuster la position d'arrêt de l'aimant permanent (10) en amenant un courant générant un flux magnétique qui repousse une polarité de l'aimant permanent (10) à s'écouler à travers la première bobine.

2. Dispositif de transport d'échantillon selon la revendication 1, dans lequel
des flux magnétiques générés par la première bobine et la deuxième bobine ont des polarités différentes de flux magnétiques générés sur un côté d'une surface faisant face à l'aimant permanent (10).

3. Dispositif de transport d'échantillon selon la revendication 1, dans lequel
quand une distance entre un centre de l'aimant permanent (10) et un centre de la première bobine est défini comme x1,
une distance depuis le centre de l'aimant permanent (10) jusqu'à une portion d'extrémité de l'aimant permanent (10) est définie comme D/2, et
une distance depuis le centre de la première bobine jusqu'à la portion d'extrémité de l'aimant permanent (10) est d/2,
le circuit de pilotage (50) ajuste la position d'arrêt de l'aimant permanent (10) en amenant un courant générant un flux magnétique qui repousse une polarité de l'aimant permanent (10) à s'écouler à travers la première bobine dans une section dans laquelle x1 ≤ (D/2 + d/2).

4. Dispositif de transport d'échantillon selon la revendication 1, dans lequel
quand une distance entre un centre de l'aimant permanent (10) et un centre de la première bobine est défini comme d/2,
quand le centre de l'aimant permanent (10) est dans une section de ±d/2, le circuit de pilotage (50) ajuste la position d'arrêt de l'aimant permanent (10) en amenant un courant générant un flux magnétique qui repousse une polarité de l'aimant permanent (10) à s'écouler à travers la première bobine.

5. Dispositif de transport d'échantillon selon la revendication 1, dans lequel chacune des bobines (30) inclut un noyau (20) fait d'un matériau magnétique et d'un bobinage enroulé autour d'une périphérie extérieure du noyau (20),
un diamètre D de l'aimant permanent (10) est plus grand qu'un diamètre d d'un noyau (20) de la première bobine, et
quand un centre de l'aimant permanent (10) est dans une plage de ±(D - d)/2, le circuit de pilotage (50) ajuste la position d'arrêt de l'aimant permanent (10) en amenant un courant générant un flux magnétique qui repousse une polarité de l'aimant permanent (10) à s'écouler à travers la première bobine.

6. Dispositif de transport d'échantillon selon la revendication 1, dans lequel
chacune des bobines (30) inclut un noyau (20) fait d'un matériau magnétique et un bobinage enroulé autour d'une périphérie extérieure du noyau (20),
un diamètre D de l'aimant permanent (10) est plus petit qu'un diamètre d d'un noyau (20) de la première bobine, et
quand un centre de l'aimant permanent (10) est dans une plage de ±(d - D)/2, le circuit de pilotage (50) ajuste la position d'arrêt de l'aimant permanent (10) en amenant un courant générant un flux magnétique qui repousse une polarité de l'aimant permanent (10) à s'écouler à travers la première bobine.

7. Dispositif de transport d'échantillon selon la revendication 1, dans lequel
chacune des bobines inclut un noyau (20) fait d'un matériau magnétique et un bobinage enroulé autour d'une périphérie extérieure du noyau (20), et
une aire de l'aimant permanent (10) projetée jusque sur une surface de transport est plus petite qu'une aire du noyau (20) projetée jusque sur la surface de transport.

8. Dispositif de transport d'échantillon selon la revendication 1, dans lequel
chacune des bobines inclut un noyau (20) fait d'un matériau magnétique et un bobinage enroulé autour d'une périphérie extérieure du noyau (20), et
une aire du noyau (20) projetée jusque sur une surface de transport est incluse dans une aire de l'aimant permanent (10) projetée jusque sur la surface de transport.

9. Dispositif de transport d'échantillon selon la revendication 1, dans lequel
une forme d'un noyau (20) de la première bobine est une forme de T, et une aire de section transversale du noyau (20) sur un côté d'une surface faisant face à l'aimant permanent (10) est plus grande.

10. Dispositif de transport d'échantillon selon la revendication 1, comprenant en outre :
un bobinage de la deuxième bobine et un bobinage d'une troisième bobine agencés de façon à prendre en sandwich un bobinage de la première bobine, dans lequel
le dispositif de transport d'échantillon est configuré pour amener un courant générant un flux magnétique repoussant une polarité de l'aimant permanent (10) à s'écouler à travers le bobinage de la première bobine, et pour amener un courant générant un flux magnétique attirant la polarité de l'aimant permanent (10) à s'écouler à travers le bobinage de la deuxième bobine et le bobinage de la troisième bobine.

11. Dispositif de transport d'échantillon selon l'une quelconque des revendications 1 à 10, comprenant en outre :
une unité configurée pour détecter une position de l'aimant permanent (10).

12. Système d'analyse d'échantillon, comprenant :
le dispositif de transport d'échantillon selon l'une quelconque des revendications 1 à 10.

13. Dispositif de prétraitement d'échantillon, comprenant :
le dispositif de transport d'échantillon selon l'une quelconque des revendications 1 à 10.
